(19) Europäisches Patentamt / European Patent Office / Office européen des brevets

(11) **EP 4 290 455 A1**

(12) # EUROPEAN PATENT APPLICATION
published in accordance with Art. 153(4) EPC

(43) Date of publication:
**13.12.2023 Bulletin 2023/50**

(21) Application number: **21924853.1**

(22) Date of filing: **20.12.2021**

(51) International Patent Classification (IPC):
**G06T 7/20** (2017.01)

(52) Cooperative Patent Classification (CPC):
**G06T 7/20**

(86) International application number:
**PCT/JP2021/046941**

(87) International publication number:
**WO 2022/168468 (11.08.2022 Gazette 2022/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.02.2021 JP 2021018518**

(71) Applicant: OMRON Corporation
Kyoto 600-8530 (JP)

(72) Inventors:
• NISHIYUKI, Kenta
Kyoto-shi, Kyoto 600-8530 (JP)
• KINOSHITA, Koichi
Kyoto-shi, Kyoto 600-8530 (JP)
• EBISUNO, Soichi
Kyoto-shi, Kyoto 600-8530 (JP)

(74) Representative: Appelt, Christian W.
Boehmert & Boehmert
Anwaltspartnerschaft mbB
Pettenkoferstrasse 22
80336 München (DE)

(54) **PERIODIC OPERATION DETECTION DEVICE, PERIODIC OPERATION DETECTION METHOD, AND PERIODIC OPERATION DETECTION PROGRAM**

(57) A periodic motion detection device can detect periodic motions each including multiple motions with different lengths. The periodic motion detection device includes a clusterer (13) that groups time-series movement features extracted from a video (1Ba) associated an operation performed by an operator into clusters, a sequential pattern miner (16) that identifies frequent patterns from time-series data including the grouped the clusters, a frequent pattern extractor (17) that extracts, using two different methods, the identified frequent patterns from the time-series data to generate two sets of frequent patterns, and a periodic motion detector (18) that detects periodic motions based on either of the two sets of frequent patterns.

FIG. 2

Periodic motion detection device (100)

20a Image sensor  20b Image sensor  20c Image sensor

10

11 Obtainer
12 Extractor
13 Clusterer
14 Labeler
15 Excluder
16 Sequential pattern miner
17 Frequent pattern extractor
18 Periodic motion detector
19 Evaluator
1A Output unit
1B Storage — 1Ba Video, 1Bb Trained model

EP 4 290 455 A1

Processed by Luminess, 75001 PARIS (FR)

**Description**

FIELD

The present disclosure relates to a periodic motion detection device, a periodic motion detection method, and a periodic motion detection program.

BACKGROUND

Patent Literature 1 describes a method for detecting a periodic motion, such as a hand gesture, from a moving image. The detection method uses a frequency transform (Fourier transform) performed on a predetermined region of each of multiple frame images, and determines whether a periodic motion to be detected is in the frame images based on the frequency resulting from the transform and the frequency of the periodic motion to be detected. With this detection method, the motions are to have equal time lengths to allow comparison between them using the frequency transform technique.

CITATION LIST

PATENT LITERATURE

Patent Literature 1: Japanese Unexamined Patent Application Publication No. 2012-123538

SUMMARY

TECHNICAL PROBLEM

A periodic motion of an operator operating at a production site such as a factory typically includes multiple motions with different lengths. Examples of such multiple motions include gripping a part in a part box, transporting a gripped part to a work space, assembling transported parts together or coordinating such parts, and storing a finished product into a storage area.
The method described in Patent Literature 1 cannot detect motions without having equal lengths and thus cannot detect a periodic motion including multiple motions from a moving image.
One or more aspects of the present disclosure are directed to a periodic motion detection device, a periodic motion detection method, and a periodic motion detection program to detect periodic motions each including multiple motions with different lengths.

SOLUTION TO PROBLEM

A periodic motion detection device according to one aspect of the present disclosure includes a clusterer that groups time-series movement features extracted from time-series information about an operation performed by an operator into a plurality of clusters and outputs the plurality of clusters as one-dimensional time-series data, a labeler that performs labeling to integrate, into one cluster, a plurality of consecutive identical clusters included in the one-dimensional time-series data, a sequential pattern miner that identifies, from the one-dimensional time-series data resulting from the labeling, sequences of frequent clusters as frequent patterns, a first frequent pattern extractor that adds, in extracting the identified frequent patterns from the one-dimensional time-series data, to an end of each of the frequent patterns to be extracted, a cluster sequence being a series of non-frequent patterns immediately following the frequent pattern to be extracted and sequentially extracts, as a frequent pattern, each of the frequent patterns with the cluster sequence being added, a second frequent pattern extractor that adds, in extracting the identified frequent patterns from the one-dimensional time-series data, to a start of each of the frequent patterns to be extracted, a cluster sequence being a series of non-frequent patterns immediately preceding the frequent pattern to be extracted and sequentially extracts, as a frequent pattern, each of the frequent patterns with the cluster sequence being added, and a periodic motion detector that detects periodic motions based on a set of the frequent patterns extracted by the first frequent pattern extractor or a set of the frequent patterns extracted by the second frequent pattern extractor.
In this aspect, time-series movement features extracted from time-series information about an operation performed by an operator are grouped into clusters, and a sequence of clusters as a frequent pattern are identified from time-series data for the clusters. The identified frequent pattern is extracted together with a non-frequent pattern following or preceding the frequent pattern with two different methods to generate two sets of patterns. One of the two sets of patterns is used to detect periodic motions of the operator. In other words, the time-series movement features extracted from the time-series information are grouped into clusters in time series. A sequence of frequent clusters identified from the time-series cluster sequences is used to identify periodic motions of the operator.

The periodic motion detection device according to the above aspect may further include an output unit that outputs, based on the periodic motions detected by the periodic motion detector, a number of cycles of the periodic motions, a start point of a periodic motion cycle, and an end point of a periodic motion cycle.

This allows multiple motions with different lengths included in each of the operator's periodic motions to be detected easily based on the start point and the end point of a periodic motion cycle and the number of cycles of the periodic motion.

In the above aspect, the periodic motion detector may compare an average of similarity scores between the frequent patterns in the set of frequent patterns extracted by the first frequent pattern extractor and an average of similarity scores between the frequent patterns in the set of frequent patterns extracted by the second frequent pattern extractor, and detect the periodic motions based on a set with a higher average of the similarity scores.

Thus, one set of elements with higher similarity than the other set is used to detect the operator's periodic motions. This thus improves the accuracy in detecting periodic motions.

The periodic motion detection device according to the above aspect may further include an evaluator that evaluates a positional deviation of the detected periodic motions detected by the periodic motion detector based on a degree of overlap between a region of the detected periodic motions arranged in time series and a region of model periodic motions arranged in time series. The output unit may further output a result of evaluation performed by the evaluator.

This structure allows objective evaluation through calculation based on a positional deviation from the model periodic motions.

The periodic motion detection device according to the above aspect may further include an excluder that excludes a cluster at a start and a cluster at an end as excluded clusters from the one-dimensional time-series data resulting from the labeling. The sequential pattern miner may identify the sequences of frequent clusters as the frequent patterns from the one-dimensional time-series data from which the excluded clusters are excluded.

This structure can exclude, from the processing, motions for preparation before the start of the operation or motions for cleanup after the operation, thus improving the processing efficiency in detecting periodic motions.

A periodic motion detection method according to another aspect of the present disclosure is implementable with a processor. The periodic motion detection method includes grouping time-series movement features extracted from time-series information about an operation performed by an operator into a plurality of clusters and outputting the plurality of clusters as one-dimensional time-series data, performing labeling to integrate, into one cluster, a plurality of consecutive identical clusters included in the one-dimensional time series data, identifying, from the one-dimensional time-series data resulting from the labeling, sequences of frequent clusters as frequent patterns, adding, in extracting the identified frequent patterns from the one-dimensional time-series data, to an end of each of the frequent patterns to be extracted, a cluster sequence being a series of non-frequent patterns immediately following the frequent pattern to be extracted and sequentially extracting, as a frequent pattern, each of the frequent patterns with the cluster sequence being added, adding, in extracting the identified frequent patterns from the one-dimensional time-series data, to a start of each of the frequent patterns to be extracted, a cluster sequence being a series of non-frequent patterns immediately preceding the frequent pattern to be extracted and sequentially extracting, as a frequent pattern, each of the frequent patterns with the cluster sequence being added, and detecting periodic motions based on a set of the frequent patterns extracted in the sequentially extracting each of the frequent patterns with the cluster sequence being added to the end of each of the frequent patterns or a set of the frequent patterns extracted in the sequentially extracting each of the frequent patterns with the cluster sequence being added to the start of each of the frequent patterns.

In this aspect, time-series movement features extracted from time-series information about an operation performed by an operator are grouped into clusters, and a sequence of clusters as a frequent pattern are identified from the time-series data for the clusters. The identified frequent pattern is extracted together with a non-frequent pattern following or preceding the frequent pattern with two different methods to generate two sets of patterns. One of the two sets of patterns is used to detect periodic motions of the operator. In other words, the time-series movement features extracted from the time-series information are clustered to generate clusters in time series. This allows periodic motions of the operator to be identified based on a sequence of frequent clusters identified from the time-series cluster sequence.

A periodic motion detection program according to still another aspect of the present disclosure causes a computer to function as a clusterer that groups time-series movement features extracted from time-series information about an operation performed by an operator into a plurality of clusters and outputs the plurality of clusters as one-dimensional time-series data, a labeler that performs labeling to integrate, into one cluster, a plurality of consecutive identical clusters included in the one-dimensional time-series data, a sequential pattern miner that identifies, from the one-dimensional time-series data resulting from the labeling, sequences of frequent clusters as frequent patterns, a first frequent pattern extractor that adds, in extracting the identified frequent patterns from the one-dimensional time-series data, to an end of each of the frequent patterns to be extracted, a cluster sequence being a series of non-frequent patterns immediately following the frequent pattern to be extracted and to sequentially extract, as a frequent pattern, each of the frequent patterns with the cluster sequence being added, a second frequent pattern extractor that adds, in extracting the identified frequent patterns from the one-dimensional time-series data, to a start of each of the frequent patterns to be extracted, a cluster sequence being a series of non-frequent patterns immediately preceding the frequent pattern to be extracted and to sequentially extract, as a frequent pattern, each of the frequent patterns with the cluster sequence being added, and a periodic motion detector that detects periodic motions based on a set of the frequent patterns extracted by the first frequent pattern extractor or a set of the frequent patterns extracted by the second frequent pattern extractor.

In this aspect, time-series movement features extracted from time-series information about an operation performed by an operator are grouped into clusters, and a sequence of clusters as a frequent pattern are identified from the time-series data for the clusters. The identified frequent pattern is extracted together with a non-frequent pattern following or preceding the frequent pattern with two different methods to generate two sets of patterns. One of the two sets of patterns is used to detect periodic motions of the operator. In other words, the time-series movement features extracted from the time-series information are clustered to generate clusters in time series. This allows periodic motions of the operator to be identified based on a sequence of frequent clusters identified from the time-series cluster sequence.

ADVANTAGEOUS EFFECTS

The periodic motion detection device, the periodic motion detection method, and the periodic motion detection program according to the above aspects of the present disclosure allow detection of periodic motions each including multiple motions with different lengths.

BRIEF DESCRIPTION OF THE DRAWINGS

FIG. 1 is a schematic diagram of an example system including a periodic motion detection device according to an embodiment of the present disclosure.
FIG. 2 is a functional block diagram of the system including the periodic motion detection device.
FIG. 3 is a schematic diagram of example periodic motion detection performed by the periodic motion detection device.
FIG. 4 is a schematic diagram of example data before and after clustering.
FIGs. 5A to 5F are schematic diagrams of the states of data in the periodic motion detection process.
FIG. 6 is an example chart showing the results of periodic motion detection that are output in time series.
FIG. 7 is a diagram of the periodic motion detection device showing its hardware configuration.
FIG. 8 is a flowchart describing an example operation of the periodic motion detection device.

DETAILED DESCRIPTION

One or more embodiments of the present disclosure (hereafter, the present embodiment) will now be described with reference to the drawings. In the figures, the components with the same reference numerals have the same or similar structures.

1. Example Use

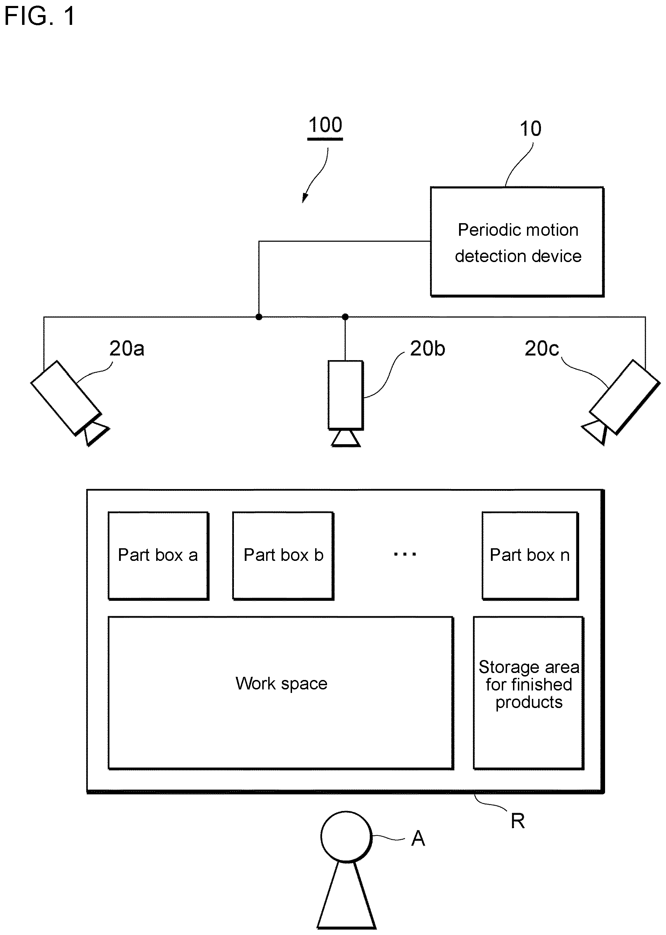

One example use of the structure according to one embodiment of the present disclosure will now be described with reference to FIG. 1. In a system 100 including a periodic motion detection device 10 according to the present embodiment, image sensors 20a, 20b, and 20c capture videos of motions of an operator A in a work region R. The periodic motion detection device 10 obtaining the video groups time-series movement features extracted from the video into clusters, identifies a sequence of clusters with a frequent pattern from the time-series data for the clusters, and extracts the identified frequent pattern with two different methods to generate two sets of patterns. One of the two sets of patterns is used to detect periodic motions.

Frequent patterns are extracted with the two methods described below. The two methods each use a sequence of one or more clusters between adjacent frequent patterns as a non-frequent pattern.

The first extraction method extracts every frequent pattern combined with one or more non-frequent patterns immediately following the frequent pattern as one frequent pattern. Such frequent patterns are extracted to form a first set of extracted frequent patterns.

The second extraction method extracts every frequent pattern combined with one or more non-frequent patterns immediately preceding the frequent pattern as one frequent pattern. Such frequent patterns are extracted to form a second set of extracted frequent patterns.

The average of similarity scores between the frequent patterns in the first set is compared with the average of similarity scores between the frequent patterns in the second set. The set with a higher average similarity score is used to detect periodic motions.

The detected periodic motions are further used to identify the number of cycles of a periodic motion and the start point and the end point of the periodic motion cycle.

In this manner, the features of movements extracted from the video are grouped into clusters in time series. The sequence of frequent clusters identified from the time series cluster sequence is then used to identify periodic motions. This structure can detect periodic motions each including multiple motions with different lengths.

In other words, the periodic motion detection device 10 according to the present embodiment can detect periodic motions each including multiple motions with different lengths.

2. Example Structure

Functional Components

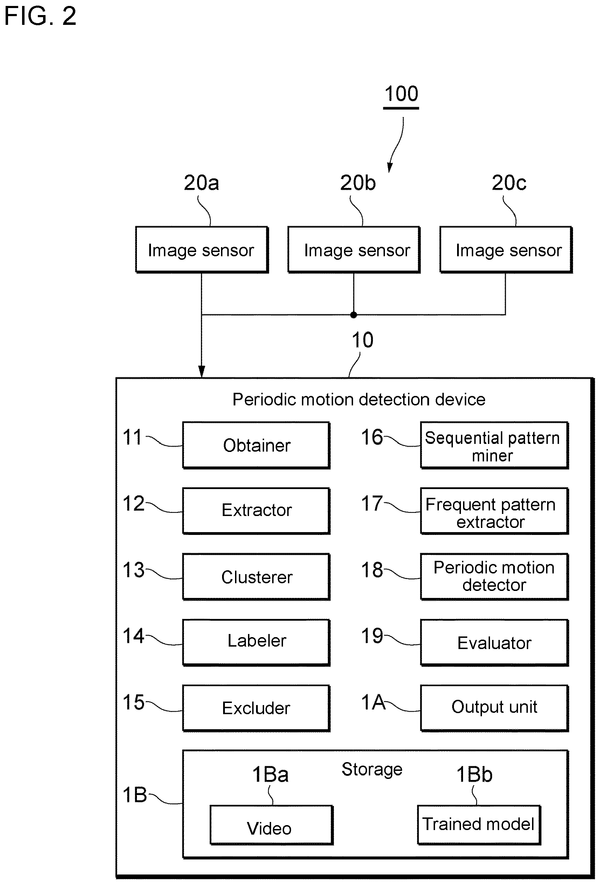

The functional components of the system 100 including the periodic motion detection device 10 according to the present embodiment will now be described with reference to FIG. 2. The system 100 includes three image sensors 20a, 20b, and 20c and a periodic motion detection device 10. The three image sensors 20a, 20b, and 20c may be hereafter referred to as image sensors 20 without distinguishing from one another. The periodic motion detection device 10 includes, as its functional components, for example, an obtainer 11, an extractor 12, a clusterer 13, a labeler 14, an excluder 15, a sequential pattern miner 16, a frequent pattern extractor 17, a periodic motion detector 18, an evaluator 19, an output unit 1A, and a storage 1B. The storage 1B stores, for example, a video 1Ba and a trained model 1Bb.

The functional components of the system 100 including the periodic motion detection device 10 will now be described in detail.

Image Sensor

Each image sensor 20 is, for example, a general-purpose camera to capture a video containing scenes of an operator A performing motions in a work region R. Each image sensor 20 includes, for example, a detector as a functional component. The detector detects the motions of the operator A and outputs a video showing the motions as time-series information.

Each of the image sensors 20a, 20b, and 20c is located to capture a video of the entire work region R and the entire body of the operator A. In this case, for example, the image sensors 20a, 20b, and 20c may be located to capture a video of the entire work region R and the entire body of the operator A. In another example, the image sensors 20a, 20b, and 20c may each be located to capture a video of a portion of the work region R and a portion of the operator A. The videos captured by the three image sensors 20 are then combined to represent the entire work region R and the entire body of the operator A. In another example, the image sensors 20a, 20b, and 20c may each capture a video of the work region R and the operator A with a different magnification. The system 100 may not include three image sensors 20, but may include at least one image sensor 20.

Obtainer

The obtainer 11 obtains, from the image sensors 20, time-series information (a video in the present embodiment) about the motions performed by the operator A. The time series information obtained by the obtainer 11 is transmitted to the storage 1B and stored as the video 1 Ba. The obtainer 11 also obtains the video 1Ba stored in the storage 1B.

Extractor

The extractor 12 performs movement feature extraction to extract features of the operator's movements from images in the video 1Ba.

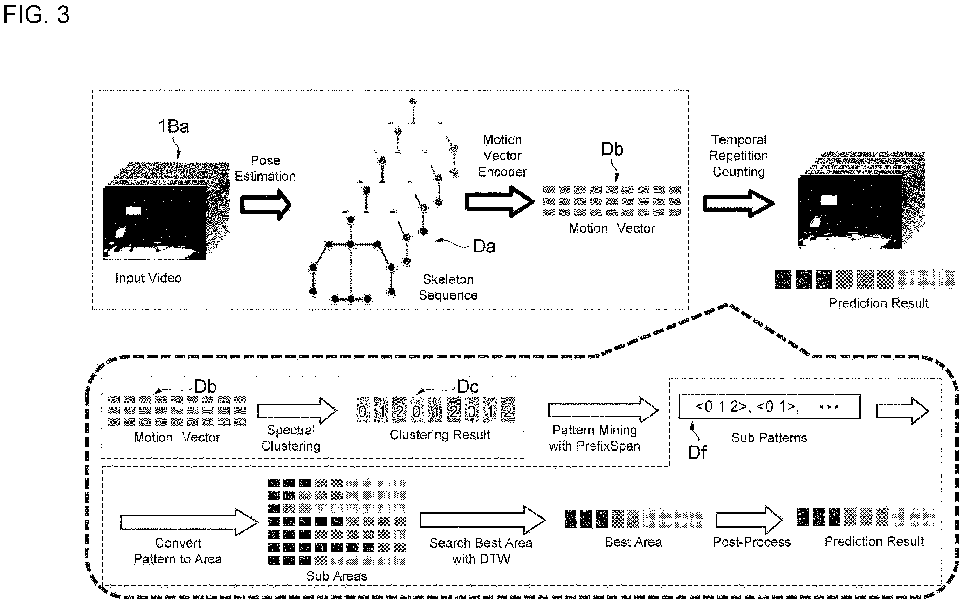

The process will be described in more detail with reference to FIG. 3. As shown in the upper part of FIG. 3, the extractor 12 detects skeleton data Da indicating the movements of the operator's skeleton from the images in the video 1Ba, and extracts movement features Db based on the detected skeleton data Da. Skeleton data can be detected using, for example, a known skeleton detection method such as OpenPose.

A trained model 1Bb may also be used to extract movement features Db based on the skeleton data Da. A known model such as an autoencoder may be, for example, used as the trained model 1Bb. More specifically, the extractor 12 inputs the skeleton data Da to the autoencoder and extracts the movement features Db by extracting movement component data alone from the data encoded and separated by the autoencoder (e.g., movement component data, skeleton component data, and viewpoint component data).

The movement feature extraction is not limited to the above process. For example, the features Db of the operator's movements may be extracted from images in the video 1Ba. The features of the movements may be extracted with a known feature extraction technique such as the scale-invariant feature transform (SIFT) or speeded up robust features (SURF).

Clusterer

The clusterer 13 in FIG. 2 performs clustering based on the time-series movement features Db extracted by the extractor 12.

The process will be described in more detail with reference to FIG. 3. As shown in the middle part of FIG. 3, the clusterer 13 groups the time-series movement features Db extracted by the extractor 12 into clusters, and outputs the resulting clusters as one-dimensional time-series data Dc.

For example, spectral clustering may be used as the clustering algorithm. In spectral clustering, any number of clusters may be used. For example, eight clusters may be included in each of eight groups. Each group includes clusters each assigned with the cluster number corresponding to the group.

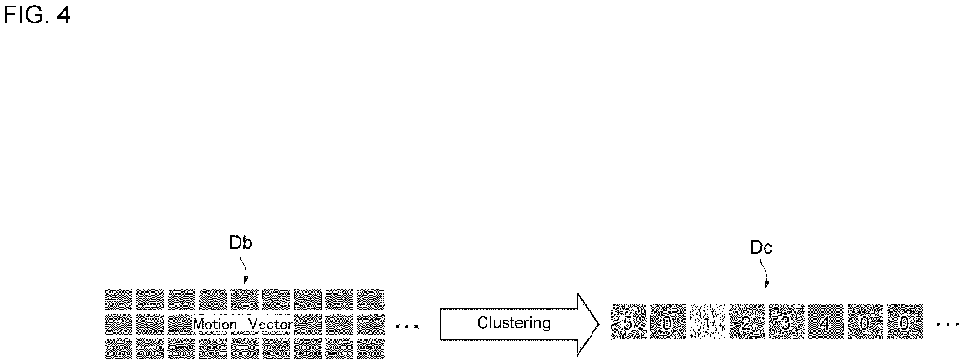

This process will be described in more detail with reference to FIG. 4. In the figure, one-dimensional time-series data Dc is output after the clustering performed on the time-series movement features Db. Of the clusters included in the time-series data Dc, for example, the first cluster from the left is assigned with the cluster number 5, the second cluster with the cluster number 0, the third cluster with the cluster number 1, and the fourth cluster with the cluster number 2.

For example, the group of movements corresponding to gripping may be assigned with the cluster number 0, the group of movements corresponding to transportation may be assigned with the cluster number 1, and the group of movements corresponding to coordination may be assigned with the cluster number 2. The movements corresponding to gripping include, for example, a movement to grip a box or a part. The movements corresponding to transportation include, for example, a movement to transport a box or a part. The movements corresponding to coordination include, for example, a movement to fix or assemble a box or a part to an object.

Labeler

The labeler 14 in FIG. 2 performs labeling to integrate multiple consecutive identical clusters included in the one-dimensional time-series data output from the clusterer 13 into one cluster.

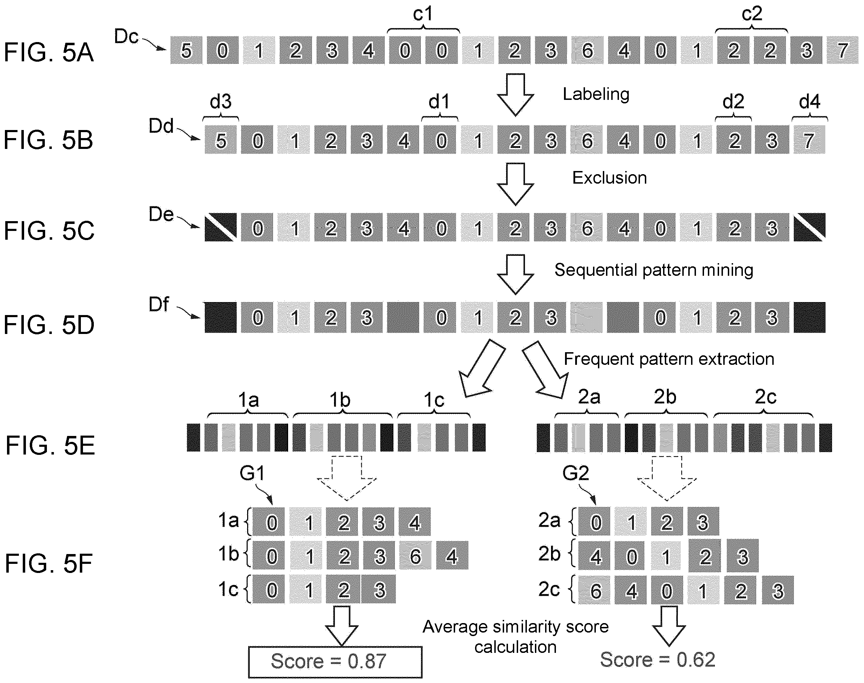

The process will be described in more detail with reference to FIGs. 5A to 5F. The labeler 14 performs labeling on the one-dimensional time-series data Dc shown in FIG. 5A and outputs the one-dimensional time-series data Dd shown in FIG. 5B. The time-series data Dc before the labeling includes a section c1 including two consecutive 0s and a section c2 including two consecutive 2s. The time-series data Dd after the labeling includes the 0s integrated into one 0 (d1) and the 2s integrated into one 2 (d2).

Excluder

The excluder 15 in FIG. 2 excludes the cluster at the start and the cluster at the end as excluded clusters from the one-dimensional time-series data.

The process will be described in more detail with reference to FIGs. 5A to 5F. Of the clusters included in the one-dimensional time-series data Dd shown in FIG. 5B, the excluder 15 determines that a cluster d3 at the start and a cluster d4 at the end are excluded clusters. After determining that these clusters can be excluded from subsequent processing, the excluder 15 outputs the one-dimensional time-series data De shown in FIG. 5C. The excluded clusters may be deleted from the time-series data Dd, or may be identifiable as excluded clusters.

Motions such as preparation and cleanup occur before and after a series of operations, unlike motions occurring in the series of operations including periodic motions. Thus, the clusters at the start and at the end are excluded. The clusters at the start and at the end representing motions different from motions in the series of operations are excluded from the time-series data to be processed to improve the processing efficiency in detecting periodic motions.

The clusters to be excluded from the processing are not limited to the clusters at the start and at the end. For example, clusters relatively distant from other clusters may be excluded as excluded clusters from the clusters included in the one-dimensional time-series data.

Sequential Pattern Miner

The sequential pattern miner 16 in FIG. 2 performs sequential pattern mining to identify sequences of frequent clusters as frequent patterns from the one-dimensional time-series data obtained through the exclusion. For example, PrefixSpan may be used as a method for sequential pattern mining.

The process will be described in more detail with reference to FIGs. 5A to 5F. The sequential pattern miner 16 extracts frequent subsequence patterns from cluster sequences included in the one-dimensional time-series data De shown in FIG. 5C. The sequential pattern miner 16 outputs one-dimensional time-series data Df shown in FIG. 5D as a result of the sequential pattern mining. In the time-series data Df, a pattern <0,1,2,3> is identified as a frequent subsequence pattern.

Frequent Pattern Extractor

The frequent pattern extractor 17 in FIG. 2 performs frequent pattern extraction using two different methods to extract sequences with the frequent pattern identified by the sequential pattern miner 16 from the time-series data. With these two methods, a sequence of one or more clusters located between adjacent frequent patterns is defined as a non-frequent pattern. The two methods will now be described sequentially.

The first extraction method extracts every frequent pattern combined with one or more non-frequent patterns immediately following the frequent pattern as one frequent pattern. Such frequent patterns are extracted to form a first set of extracted frequent patterns.

The process will be described in more detail with reference to FIGs. 5A to 5F. In extracting sequences with the identified frequent pattern <0,1,2,3> from the one-dimensional time-series data Df shown in FIG. 5D, the frequent pattern extractor 17 (a first frequent pattern extractor) adds, to the end of each frequent pattern <0,1,2,3> to be extracted, a cluster sequence being a series of non-frequent patterns immediately following the frequent pattern <0,1,2,3> to be extracted. Thus, as shown in FIG. 5E, patterns 1a, 1b, and 1c are sequentially extracted each as a frequent pattern. The extracted frequent patterns 1a, 1b, and 1c are included in a first set G1 shown in FIG. 5F.

As shown in FIG. 5F, the first set G1 contains a frequent pattern 1a including <0, 1, 2, 3, 4> as elements, a frequent pattern 1b including <0, 1, 2, 3, 6, 4> as elements, and a frequent pattern 1c including <0, 1, 2, 3> as elements.

The second extraction method extracts every frequent pattern combined with one or more non-frequent patterns immediately preceding the frequent pattern as one frequent pattern. Such frequent patterns are extracted to form a second set of extracted frequent patterns.

The process will be described in more detail with reference to FIGs. 5A to 5F. In extracting sequences with the identified frequent pattern <0,1,2,3> from the one-dimensional time-series data Df shown in FIG. 5D, the frequent pattern extractor 17 (a second frequent pattern extractor) adds, to the start of each frequent pattern <0,1,2,3> to be extracted, a cluster sequence being a series of non-frequent patterns immediately preceding the frequent pattern <0,1,2,3> to be extracted. Thus, as shown in FIG. 5E, patterns 2a, 2b, and 2c are sequentially extracted each as a frequent pattern. The extracted frequent patterns 2a, 2b, and 2c are included in a second set G2 shown in FIG. 5F.

As shown in FIG. 5F, the second set G2 contains a frequent pattern 2a including <0, 1, 2, 3> as elements, a frequent pattern 2b including <4, 0, 1, 2, 3> as elements, and a frequent pattern 2c including <6, 4, 0, 1, 2, 3> as elements.

Periodic Motion Detector

The periodic motion detector 18 in FIG. 2 performs periodic motion detection to detect periodic motions based on one of the two sets generated by the frequent pattern extractor 17.

For example, the periodic motion detector 18 calculates the average of similarity scores between the frequent patterns in each of the two sets to detect the periodic motions based on the set with a higher average similarity score.

The similarity between frequent patterns may be calculated with, for example, a method to measure similarity between time-series data such as dynamic time warping (DTW).

When the average of similarity scores is, for example, 0.87 in the first set G1 and 0.62 in the second set G2 as shown in FIG. 5F, the periodic motion detector 18 detects the periodic motions based on the first set G1. In this case, similarity is represented as a score between 0 and 1. The similarity score approaches 1 as the similarity between two elements increases.

The set with a higher average similarity score is used to detect periodic motions of the operator to increase the accuracy in detecting periodic motions. Evaluator

The evaluator 19 in FIG. 2 evaluates any positional deviation of the periodic motion detected by the periodic motion detector 18.

More specifically, the evaluator 19 evaluates the positional deviation of the detected periodic motions based on the degree of overlap between the region of the detected periodic motions arranged in time series and the region of model periodic motions arranged in time series.

For example, the positional deviation may be evaluated with an evaluation index calculated by Formula 1 below using Intersection over Union (IoU), or an evaluation index IoUA. IoU, which is a known indicator of the degree of overlap between two regions, is calculated as the area common to the two regions divided by the area of union of the two regions.

$$\mathrm{IoUA} = \frac{1}{K} \sum_{i=1}^{K} \frac{1}{N} \sum_{j=1}^{N} \left[ IoU_{ij} \geq th \right] \quad \cdots \quad (1)$$

In Formula 1, K is the number of data sets (number of videos), N is the number of cycles contained in one set of data, and th is the threshold value of IoU.

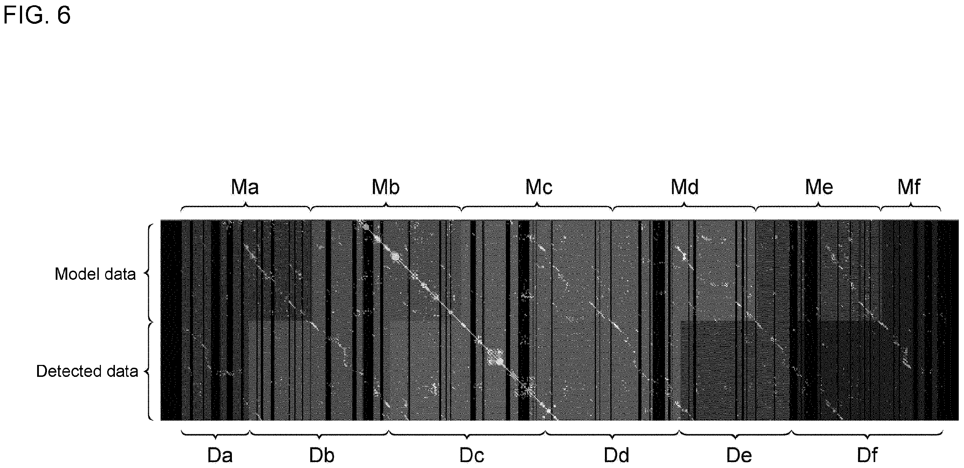

This will be described in more detail with reference to FIG. 6, which is an example chart showing the results of periodic motion detection that are output in time series. The upper part of FIG. 6 shows data indicating model periodic motions (hereafter, model data), where Ma, Mb, Me, Md, Me, and Mf each indicate the region of the model periodic motion. The lower part of FIG. 6 shows data indicating periodic motions detected by the periodic motion detector 18 (hereafter, detected data), where Da, Db, Dc, Dd, De, and Df each indicate the region of the detected periodic motion. For example, Ma and Da indicate the region of movements corresponding to gripping, Mb and Db indicate the region of movements corresponding to transportation, and Mc and Dc indicate the region of movements corresponding to coordination.

In this case, the evaluator 19 calculates the degree of overlap between the region of the detected periodic motions indicated by Da, Db, Dc, Dd, De, and Df and the region of the model periodic motions indicated by Ma, Mb, Me, Md, Me, and Mf using Formula 1 and evaluates the positional deviation of the detected periodic motions based on the calculated evaluation index IoUA. When the IoU indicating the degree of overlap is not less than the threshold value, the value in the square brackets [ ] in Formula 1 is 1. When the IoU indicating the degree of overlap is less than the threshold value, the value in the square brackets [ ] in Formula 1 is 0. When either the region of the detected periodic motions or the region of the model periodic motions occurs, the value in the square brackets [ ] of Formula 1 is 0.

Output Unit

The output unit 1A in FIG. 2 performs output based on the periodic motions detected by the periodic motion detector 18.

More specifically, the output unit 1A outputs, based on the detected periodic motions, the number of cycles of the periodic motion, the start points of periodic motion cycles, the end points of periodic motion cycles, and the result of evaluation performed by the evaluator 19. The number of cycles of the periodic motion, the start points of periodic motion cycles, and the end points of periodic motion cycles are calculated based on the chart in FIG. 6.

Thus, multiple motions with different lengths included in the operator's periodic motion are detected, and then these motions can be evaluated.

Hardware Configuration

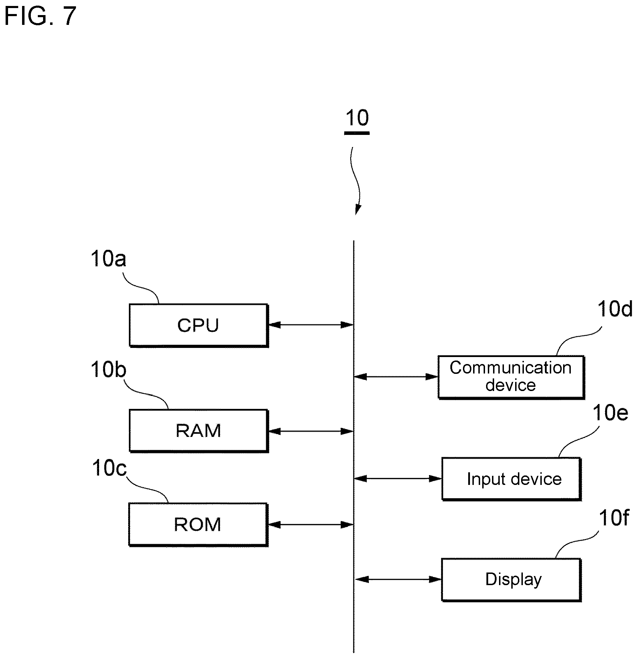

The hardware configuration of the periodic motion detection device 10 according to the present embodiment will now be described with reference to FIG. 7. The periodic motion detection device 10 includes a central processing unit (CPU) 10a as an arithmetic unit, a random-access memory (RAM) 10b and a read-only memory (ROM) 10c as a storage 1B, a communication device 10d, an input device 10e, and a display 10f. These components are interconnected with a bus to allow data communication between them. Although the periodic motion detection device 10 includes a single computer in the present embodiment, the periodic motion detection device 10 may include multiple computers.

The CPU 10a functions as a controller that executes programs stored in the RAM 10b or the ROM 10c and performs calculations and processing associated with data. The CPU 10a receives various items of input data from the input device 10e and the communication device 10d, and displays the results of calculations using the input data on the display 10f or stores the results into the RAM 10b or the ROM 10c.

The RAM 10b is, for example, a semiconductor memory that stores data in a rewritable manner. The ROM 10c is, for example, a semiconductor memory that stores data in a readable and non-rewritable manner.

The communication device 10d is an interface that connects the periodic motion detection device 10 to external devices. The communication device 10d is, for example, connected with the image sensors 20 through a communication network such as a local area network (LAN) or the Internet, and receives videos from the image sensors 20.

The input device 10e is an interface for receiving data input from a user, and may include, for example, a keyboard, a mouse, and a touchscreen.

The display 10f is an interface to visually display operational results from the CPU 10a, and may be, for example, a liquid crystal display (LCD).

The program may be stored in a computer-readable storage medium, such as the RAM 10b or the ROM 10c and provided, or may be provided through the communication network connected with the communication device 10d. In the periodic motion detection device 10, the operations of the obtainer 11, the extractor 12, the clusterer 13, the labeler 14, the excluder 15, the sequential pattern miner 16, the frequent pattern extractor 17, the periodic motion detector 18, the evaluator 19, and the output unit 1A shown in FIG. 2 are implemented by the CPU 10a executing programs. The physical structure is an example and may not be independent. For example, the periodic motion detection device 10 may include a large-scale integration (LSI) circuit incorporating the CPU 10a, the RAM 10b, and the ROM 10c.

3. Operation Example

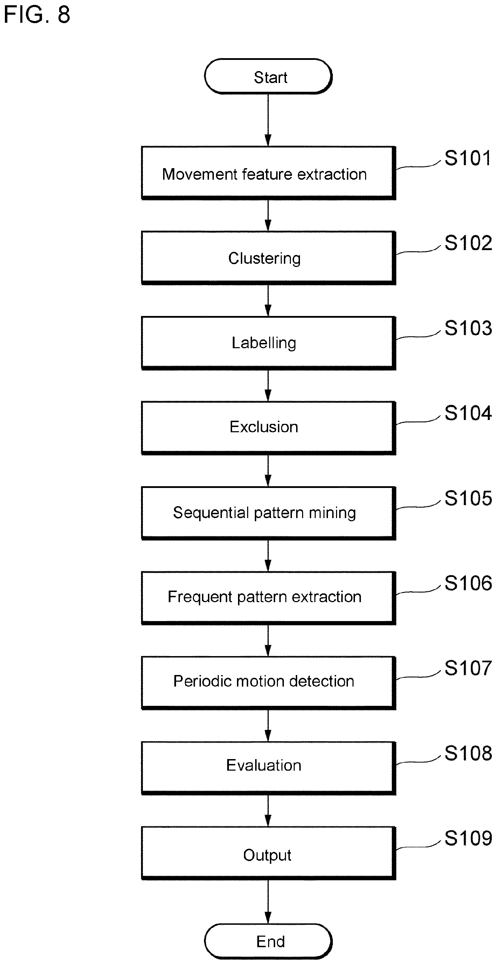

FIG. 8 is a flowchart of an example operation performed by the periodic motion detection device 10 according to the present embodiment.

The extractor 12 in the periodic motion detection device 10 first performs movement feature extraction to extract the features of the operator's movements based on images in the video 1Ba associated with the operation performed by the operator (step S101).

The clusterer 13 in the periodic motion detection device 10 performs clustering based on the time-series movement features extracted in step S101 above and outputs the resulting clusters as one-dimensional time-series data (step S102).

The labeler 14 in the periodic motion detection device 10 performs labeling to integrate multiple consecutive identical clusters in the one-dimensional time-series data output in step S102 above into one cluster (step S103).

The excluder 15 in the periodic motion detection device 10 excludes the clusters at the start and at the end as excluded clusters from the one-dimensional time-series data resulting from the labelling in step S103 above (step S104).

The sequential pattern miner 16 in the periodic motion detection device 10 performs sequential pattern mining to identify frequent cluster sequences as frequent patterns from the one-dimensional time-series data obtained through the exclusion in step S104 above (step S105).

The frequent pattern extractor 17 in the periodic motion detection device 10 performs frequent pattern extraction to extract the frequent patterns identified in step S105 above from the one-dimensional time-series data using two different methods and generates two sets of patterns (step S106).

The periodic motion detector 18 in the periodic motion detection device 10 performs periodic motion detection to detect periodic motions based on one of the two sets generated in step S106 above (S107).

The evaluator 19 in the periodic motion detection device 10 evaluates any positional deviation of the periodic motions detected in step S107 above (S108).

The output unit 1A in the periodic motion detection device 10 outputs, based on the periodic motions detected in step S107 above to output the number of cycles of the periodic motion, the start points of periodic motion cycles, the end points of periodic motion cycles, and the result of evaluation in step S108 above (step S109). The operation is thus complete.

As described above, the periodic motion detection device 10 according to the present embodiment groups the time-series movement features Db extracted from the video 1Ba of the operation performed by the operator into clusters, and identifies frequent patterns from the time-series data Dc for the clusters. The identified frequent patterns are extracted using two different methods to generate the first set and the second set of patterns, and the periodic motions of the operator are detected based on one of the two sets. In other words, clustering the time-series movement features Db extracted from the video 1Ba and sequencing the clusters in time series enables the periodic motions of the operator to be identified based on the frequent patterns identified from the time series cluster sequence.

Of the first set and the second set, the set containing elements with higher similarity than the other set is used to detect the operator's periodic motions. This thus improves the accuracy in detecting periodic motions.

The start points and the end points of periodic motion cycles and the number of cycles of the periodic motion are output together with evaluation results to easily detect multiple motions with different lengths included in the operator's periodic motion and to further provide evaluation on those motions.

Thus, the periodic motion detection device 10 according to the present embodiment can detect periodic motions each including multiple motions with different lengths.

4. Modifications

The present disclosure is not limited to the embodiments described above, and may be modified in various forms without departing from the spirit and scope of the invention. The above embodiments are mere examples and may not limit the present disclosure.

For example, the time-series information is a video in the above embodiment, but the time-series information may not be a video. More specifically, the time-series information may be information about coordinates indicating motions of an operator A measured by a motion capturer in place of the image sensor 20, or information indicating motions of an operator A measured by an acceleration sensor or a gyro sensor attached to an operator A in place of the image sensor 20. More specifically, the time-series information may be information indicating the varying states of pressure values measured by pressure sensors located in the work region R in place of the image sensor 20, or information indicating changes in events detected by photoelectric sensors located in the work region R in place of the image sensor 20. Further, each item of information described above included in the time series information may not be used separately, but two or more items of the information may be combined.

Embodiments of the present disclosure may also be written as the appendixes below. The embodiments of the present disclosure are not limited to the embodiments described in the appendixes below. The embodiments of the present disclosure may also be modified by replacing or combining parts recited in the appendixes.

Appendix 1

A periodic motion detection device (10), comprising:

a clusterer (13) configured to group time-series movement features extracted from time-series information about an operation performed by an operator into a plurality of clusters and output the plurality of clusters as one-dimensional time-series data;
a labeler (14) configured to perform labeling to integrate, into one cluster, a plurality of consecutive identical clusters included in the one-dimensional time-series data;
a sequential pattern miner (16) configured to identify, from the one-dimensional time-series data resulting from the labeling, sequences of frequent clusters as frequent patterns;
a first frequent pattern extractor (17) configured to add, in extracting the identified frequent patterns from the one-dimensional time-series data, to an end of each of the frequent patterns to be extracted, a cluster sequence being a series of non-frequent patterns immediately following the frequent pattern to be extracted and to sequentially extract, as a frequent pattern, each of the frequent patterns with the cluster sequence being added;
a second frequent pattern extractor (17) configured to add, in extracting the identified frequent patterns from the one-dimensional time-series data, to a start of each of the frequent patterns to be extracted, a cluster sequence being a series of non-frequent patterns immediately preceding the frequent pattern to be extracted and to sequentially extract, as a frequent pattern, each of the frequent patterns with the cluster sequence being added; and
a periodic motion detector (18) configured to detect periodic motions based on a set of the frequent patterns extracted by the first frequent pattern extractor (17) or a set of the frequent patterns extracted by the second frequent pattern extractor (17).

Appendix 2

The periodic motion detection device (10) according to appendix 1, further comprising:
an output unit (1A) configured to output, based on the periodic motions detected by the periodic motion detector (18), a number of cycles of the periodic motions, a start point of a periodic motion cycle, and an end point of a periodic motion cycle.

Appendix 3

The periodic motion detection device (10) according to appendix 1 or appendix 2, wherein
the periodic motion detector (18) compares an average of similarity scores between the frequent patterns in the set of frequent patterns extracted by the first frequent pattern extractor (17) and an average of similarity scores between the frequent patterns in the set of frequent patterns extracted by the second frequent pattern extractor (17), and detects the periodic motions based on a set with a higher average of the similarity scores.

Appendix 4

The periodic motion detection device (10) according to any one of appendixes 1 to 3, further comprising:

an evaluator (19) configured to evaluate a positional deviation of the detected periodic motions detected by the periodic motion detector (18) based on a degree of overlap between a region of the detected periodic motions arranged in time series and a region of model periodic motions arranged in time series,
wherein the output unit (1A) further outputs a result of evaluation performed by the evaluator (19).

Appendix 5

The periodic motion detection device (10) according to any one of appendixes 1 to 4, further comprising:

an excluder (15) configured to exclude a cluster at a start and a cluster at an end as excluded clusters from the one-dimensional time-series data resulting from the labeling,
wherein the sequential pattern miner (16) identifies the sequences of frequent clusters as the frequent patterns from the one-dimensional time-series data from which the excluded clusters are excluded.

Appendix 6

A periodic motion detection method implementable with a processor (10a), the method comprising:

grouping time-series movement features extracted from time-series information about an operation performed by an operator into a plurality of clusters and outputting the plurality of clusters as one-dimensional time-series data;
performing labeling to integrate, into one cluster, a plurality of consecutive identical clusters included in the one-dimensional time series data;
identifying, from the one-dimensional time-series data resulting from the labeling, sequences of frequent clusters as frequent patterns;
adding, in extracting the identified frequent patterns from the one-dimensional time-series data, to an end of each of the frequent patterns to be extracted, a cluster sequence being a series of non-frequent patterns immediately following the frequent pattern to be extracted and sequentially extracting, as a frequent pattern, each of the frequent patterns with the cluster sequence being added;
adding, in extracting the identified frequent patterns from the one-dimensional time-series data, to a start of each of the frequent patterns to be extracted, a cluster sequence being a series of non-frequent patterns immediately preceding the frequent pattern to be extracted and sequentially extracting, as a frequent pattern, each of the frequent patterns with the cluster sequence being added; and
detecting periodic motions based on a set of the frequent patterns extracted in the sequentially extracting each of the frequent patterns with the cluster sequence being added to the end of each of the frequent patterns or a set of the frequent patterns extracted in the sequentially extracting each of the frequent patterns with the cluster sequence being added to the start of each of the frequent patterns.

Appendix 7

A periodic motion detection program for causing a computer to function as:

a clusterer (13) configured to group time-series movement features extracted from time-series information about an operation performed by an operator into a plurality of clusters and output the plurality of clusters as one-dimensional time-series data;
a labeler (14) configured to perform labeling to integrate, into one cluster, a plurality of consecutive identical clusters included in the one-dimensional time-series data;
a sequential pattern miner (16) configured to identify, from the one-dimensional time-series data resulting from the labeling, sequences of frequent clusters as frequent patterns;
a first frequent pattern extractor (17) configured to add, in extracting the identified frequent patterns from the one-dimensional time-series data, to an end of each of the frequent patterns to be extracted, a cluster sequence being a series of non-frequent patterns immediately following the frequent pattern to be extracted and to sequentially extract, as a frequent pattern, each of the frequent patterns with the cluster sequence being added;
a second frequent pattern extractor (17) configured to add, in extracting the identified frequent patterns from the one-dimensional time-series data, to a start of each of the frequent patterns to be extracted, a cluster sequence being a series of non-frequent patterns immediately preceding the frequent pattern to be extracted and to sequentially extract, as a frequent pattern, each of the frequent patterns with the cluster sequence being added; and
a periodic motion detector (18) configured to detect periodic motions based on a set of the frequent patterns extracted by the first frequent pattern extractor (17) or a set of the frequent patterns extracted by the second frequent pattern extractor (17).

REFERENCE SIGNS LIST

| 10 | periodic motion detection device |
| 10a | CPU |
| 10b | RAM |
| 10c | ROM |
| 10d | communication device |
| 10e | input device |
| 10f | display |
| 20 | image sensor |
| 100 | system |
| A | operator |
| R | work region |
| 11 | obtainer |
| 12 | extractor |
| 13 | clusterer |
| 14 | labeler |
| 15 | excluder |
| 16 | sequential pattern miner |
| 17 | frequent pattern extractor |
| 18 | periodic motion detector |
| 19 | evaluator |
| 1A | output unit |
| 1B | storage |
| 1Ba | video |
| 1 Bb | trained model |

**Claims**

1. A periodic motion detection device, comprising:

   a clusterer configured to group time-series movement features extracted from time-series information about an operation performed by an operator into a plurality of clusters and output the plurality of clusters as one-dimensional time-series data;
   a labeler configured to perform labeling to integrate, into one cluster, a plurality of consecutive identical clusters included in the one-dimensional time-series data;
   a sequential pattern miner configured to identify, from the one-dimensional time-series data resulting from the labeling, sequences of frequent clusters as frequent patterns;
   a first frequent pattern extractor configured to add, in extracting the identified frequent patterns from the one-dimensional time-series data, to an end of each of the frequent patterns to be extracted, a cluster sequence being a series of non-frequent patterns immediately following the frequent pattern to be extracted and to sequentially extract, as a frequent pattern, each of the frequent patterns with the cluster sequence being added;
   a second frequent pattern extractor configured to add, in extracting the identified frequent patterns from the one-dimensional time-series data, to a start of each of the frequent patterns to be extracted, a cluster sequence being a series of non-frequent patterns immediately preceding the frequent pattern to be extracted and to sequentially extract, as a frequent pattern, each of the frequent patterns with the cluster sequence being added; and
   a periodic motion detector configured to detect periodic motions based on a set of the frequent patterns extracted by the first frequent pattern extractor or a set of the frequent patterns extracted by the second frequent pattern extractor.

2. The periodic motion detection device according to claim 1, further comprising:
   an output unit configured to output, based on the periodic motions detected by the periodic motion detector, a number of cycles of the periodic motions, a start point of a periodic motion cycle, and an end point of a periodic motion cycle.

3. The periodic motion detection device according to claim 1 or claim 2, wherein
   the periodic motion detector compares an average of similarity scores between the frequent patterns in the set of frequent patterns extracted by the first frequent pattern extractor and an average of similarity scores between the frequent patterns in the set of frequent patterns extracted by the second frequent pattern extractor, and detects the periodic motions based on a set with a higher average of the similarity scores.

4. The periodic motion detection device according to claim 2, further comprising:

an evaluator configured to evaluate a positional deviation of the detected periodic motions detected by the periodic motion detector based on a degree of overlap between a region of the detected periodic motions arranged in time series and a region of model periodic motions arranged in time series, wherein the output unit further outputs a result of evaluation performed by the evaluator.

5. The periodic motion detection device according to any one of claims 1 to 4, further comprising:

an excluder configured to exclude a cluster at a start and a cluster at an end as excluded clusters from the one-dimensional time-series data resulting from the labeling, wherein the sequential pattern miner identifies the sequences of frequent clusters as the frequent patterns from the one-dimensional time-series data from which the excluded clusters are excluded.

6. A periodic motion detection method implementable with a processor, the method comprising:

grouping time-series movement features extracted from time-series information about an operation performed by an operator into a plurality of clusters and outputting the plurality of clusters as one-dimensional time-series data;
performing labeling to integrate, into one cluster, a plurality of consecutive identical clusters included in the one-dimensional time series data;
identifying, from the one-dimensional time-series data resulting from the labeling, sequences of frequent clusters as frequent patterns;
adding, in extracting the identified frequent patterns from the one-dimensional time-series data, to an end of each of the frequent patterns to be extracted, a cluster sequence being a series of non-frequent patterns immediately following the frequent pattern to be extracted and sequentially extracting, as a frequent pattern, each of the frequent patterns with the cluster sequence being added;
adding, in extracting the identified frequent patterns from the one-dimensional time-series data, to a start of each of the frequent patterns to be extracted, a cluster sequence being a series of non-frequent patterns immediately preceding the frequent pattern to be extracted and sequentially extracting, as a frequent pattern, each of the frequent patterns with the cluster sequence being added; and
detecting periodic motions based on a set of the frequent patterns extracted in the sequentially extracting each of the frequent patterns with the cluster sequence being added to the end of each of the frequent patterns or a set of the frequent patterns extracted in the sequentially extracting each of the frequent patterns with the cluster sequence being added to the start of each of the frequent patterns.

7. A periodic motion detection program for causing a computer to function as:

a clusterer configured to group time-series movement features extracted from time-series information about an operation performed by an operator into a plurality of clusters and output the plurality of clusters as one-dimensional time-series data;
a labeler configured to perform labeling to integrate, into one cluster, a plurality of consecutive identical clusters included in the one-dimensional time-series data;
a sequential pattern miner configured to identify, from the one-dimensional time-series data resulting from the labeling, sequences of frequent clusters as frequent patterns;
a first frequent pattern extractor configured to add, in extracting the identified frequent patterns from the one-dimensional time-series data, to an end of each of the frequent patterns to be extracted, a cluster sequence being a series of non-frequent patterns immediately following the frequent pattern to be extracted and to sequentially extract, as a frequent pattern, each of the frequent patterns with the cluster sequence being added;
a second frequent pattern extractor configured to add, in extracting the identified frequent patterns from the one-dimensional time-series data, to a start of each of the frequent patterns to be extracted, a cluster sequence being a series of non-frequent patterns immediately preceding the frequent pattern to be extracted and to sequentially extract, as a frequent pattern, each of the frequent patterns with the cluster sequence being added; and
a periodic motion detector configured to detect periodic motions based on a set of the frequent patterns extracted by the first frequent pattern extractor or a set of the frequent patterns extracted by the second frequent pattern extractor.

## FIG. 1

# FIG. 2

**100**

| 20a | 20b | 20c |
|-----|-----|-----|
| Image sensor | Image sensor | Image sensor |

**10**

Periodic motion detection device

| 11 | Obtainer | 16 | Sequential pattern miner |
|----|----------|----|--------------------------|
| 12 | Extractor | 17 | Frequent pattern extractor |
| 13 | Clusterer | 18 | Periodic motion detector |
| 14 | Labeler | 19 | Evaluator |
| 15 | Excluder | 1A | Output unit |

1B — Storage

1Ba Video

1Bb Trained model

FIG. 4

FIG. 5A

FIG. 5B   Labeling

FIG. 5C   Exclusion

FIG. 5D   Sequential pattern mining

FIG. 5E   Frequent pattern extraction

FIG. 5F   Average similarity score calculation

Score = 0.87

Score = 0.62

FIG. 6

FIG. 7

FIG. 8

```
                    ┌──────────┐
                    │  Start   │
                    └────┬─────┘
                         │
            ┌────────────────────────────┐
            │ Movement feature extraction │────── S101
            └────────────┬───────────────┘
                         │
            ┌────────────────────────────┐
            │         Clustering          │────── S102
            └────────────┬───────────────┘
                         │
            ┌────────────────────────────┐
            │         Labelling           │────── S103
            └────────────┬───────────────┘
                         │
            ┌────────────────────────────┐
            │         Exclusion           │────── S104
            └────────────┬───────────────┘
                         │
            ┌────────────────────────────┐
            │  Sequential pattern mining  │────── S105
            └────────────┬───────────────┘
                         │
            ┌────────────────────────────┐
            │ Frequent pattern extraction │────── S106
            └────────────┬───────────────┘
                         │
            ┌────────────────────────────┐
            │  Periodic motion detection  │────── S107
            └────────────┬───────────────┘
                         │
            ┌────────────────────────────┐
            │         Evaluation          │────── S108
            └────────────┬───────────────┘
                         │
            ┌────────────────────────────┐
            │          Output             │────── S109
            └────────────┬───────────────┘
                         │
                    ┌──────────┐
                    │   End    │
                    └──────────┘
```

## INTERNATIONAL SEARCH REPORT

| International application No. |
|---|
| **PCT/JP2021/046941** |

**A. CLASSIFICATION OF SUBJECT MATTER**

*G06T 7/20*(2017.01)i
FI:   G06T7/20 300Z

According to International Patent Classification (IPC) or to both national classification and IPC

**B. FIELDS SEARCHED**

Minimum documentation searched (classification system followed by classification symbols)

G06T7/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-45403 A (HITACHI, LTD.) 22 March 2018 (2018-03-22)<br>entire text | 1-7 |
| A | JP 2008-176431 A (HITACHI, LTD.) 31 July 2008 (2008-07-31)<br>entire text | 1-7 |

☐ Further documents are listed in the continuation of Box C.     ☑ See patent family annex.

| | |
|---|---|
| \*    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **07 March 2022** | **15 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/046941**

| Patent document cited in search report | | | Publication date (day/month/year) | Patent family member(s) | | | Publication date (day/month/year) |
|---|---|---|---|---|---|---|---|
| JP | 2018-45403 | A | 22 March 2018 | US | 2018/0075235 | A1 | |
| | | | | entire text | | | |
| JP | 2008-176431 | A | 31 July 2008 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012123538 A